# FASCICULE DE BREVET EUROPEEN

(11) **EP 3 216 364 B1**
(45) Date de publication et mention de la délivrance du brevet: **06.04.2022**
(21) Numéro de dépôt: 17160134.7
(22) Date de dépôt: 09.03.2017
(51) Int. Cl.: A44C 5/00, G06F 1/16

(54) **ACCESSOIRE POUR MONTRE-BRACELET**
ACCESSOIRE FÜR ARMBANDUHR
ACCESSORY FOR WRISTWATCH

(30) Priorité: 10.03.2016 FR 1651994
(43) Date de publication de la demande: 13.09.2017
(73) Titulaire: Mondaine Watch Ltd, 8808 Pfäffikon SZ (CH)
(72) Inventeur: BERNHEIM, André, 8706 MEILEN (CH)
(74) Mandataire: Bugnion Genève

(56) Documents cités:
- EP-A1- 0 971 332
- TW-B- I 384 837
- US-A1- 2014 110 445

## Description

### DOMAINE TECHNIQUE DE L'INVENTION

La présente invention porte sur un accessoire pour montre-bracelet.

### ETAT DE LA TECHNIQUE ANTERIEURE

Dans le domaine de l'horlogerie, plus précisément dans le domaine des montres-bracelets, on trouve de nos jours une catégorie particulière qui sont les montres dites « connectées ». Ces montres, en plus de fournir les indications usuelles concernant l'écoulement du temps, fournissent toutes sortes de fonctionnalités, en particulier des fonctions de communication et/ou de paiement sans contact. Ces fonctionnalités sont généralement mises en œuvre au moyen de modules électroniques construits et configurés de manière spécifique qui, généralement, font partie intégrante du mécanisme de la montre qui, généralement, est logé dans le boîtier de celle-ci. Or, puisque ces fonctionnalités de communication et/ou de paiement sans contact sont complétement dépendantes de la présence des modules électroniques qui les fournissent et puisque ces montres ne sont généralement pas adaptées pour qu'il soit possible de retirer momentanément ces modules électroniques, un utilisateur doit donc être constamment muni de sa montre s'il souhaite profiter de ces fonctionnalités. De même, un utilisateur propriétaire d'une montre connectée fournissant des fonctionnalités de communication ou de paiement sans contact par le biais de modules électroniques spécifiques ne peut généralement pas étendre à d'autres montres de sa collection ces fonctionnalités.

On connaît les documents de l'art antérieur US 2014/110445 A1 et EP 0 971 332 A1 qui fournissent tous deux des solutions permettant d'intégrer de façon amovible des moyens spécifiques pour la communication sans fil et/ou le paiement sans contact. En particulier, EP 0 971 332 A1 décrit un accessoire comportant un logement conformé pour recevoir un dispositif de communication sans fil se présentant sous la forme d'une carte, le logement comprenant un orifice conformé pour permettre l'insertion du dispositif de communication au sein de l'accessoire de sorte que le dispositif de communication sans fil peut être logé de manière amovible au sein de l'accessoire.

### EXPOSÉ DE L'INVENTION

Un objectif de l'invention est de fournir un accessoire pour montre-bracelet apte à recevoir de manière amovible des moyens spécifiques pour la communication sans fil et/ou le paiement sans contact qui peut être adapté sur n'importe quelle montre et peut donc être, sans effort particulier, transféré d'une montre à une autre. Un autre objectif de l'invention est de faciliter l'extraction du dispositif de communication sans fil.

Ces buts sont atteints par un accessoire selon la revendication 1 (répétition des revendications).

### BRÈVE DESCRIPTION DES FIGURES

D'autres caractéristiques et avantages de l'invention ressortiront à la lecture de la description qui suit, en référence aux figures annexées, qui illustrent :
- la figure 1, une vue en perspective d'un accessoire selon un premier mode de réalisation ne faisant pas partie de l'invention ;
- la figure 2, une vue en perspective d'un accessoire selon un deuxième mode de réalisation de l'invention ; et
- la figure 3, une vue en perspective d'un accessoire selon un troisième mode de réalisation ne faisant pas partie de l'invention.

### DESCRIPTION DÉTAILLÉE DE L'INVENTION

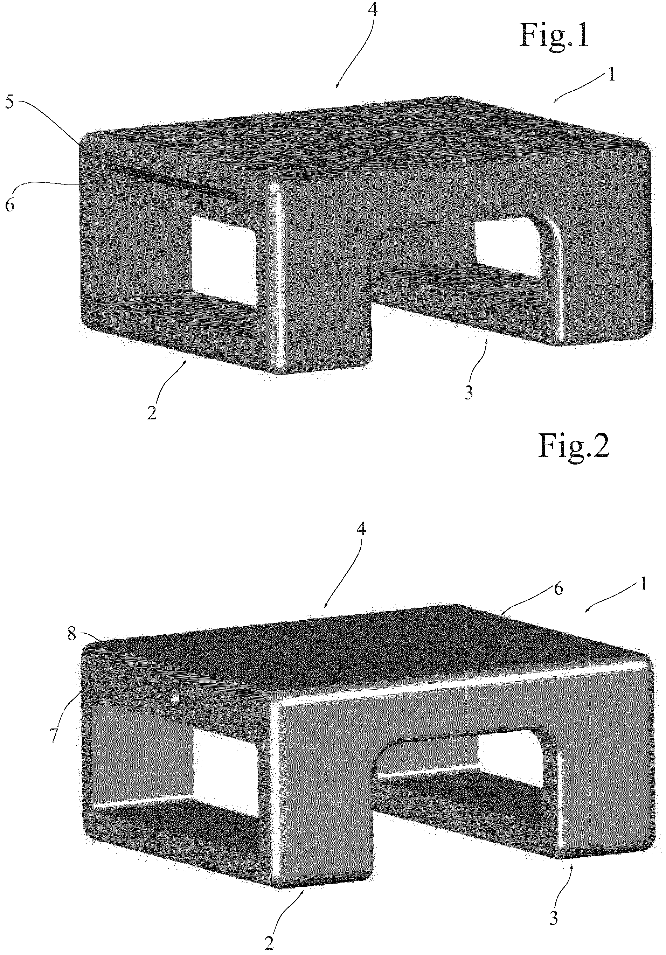

Sur la figure 1 est représenté une vue en perspective d'un accessoire **1** pour montre-bracelet selon un premier mode de réalisation ne faisant pas partie de l'invention. Selon ce mode de réalisation, l'accessoire **1** se présente sous la forme d'un passant qui comprend deux anneaux **2, 3** qui partagent ensemble une partie supérieure **4** de forme sensiblement parallélépipédique.

Au sein de la partie supérieure **4** de l'accessoire **1** est formé un logement qui définit un volume adapté pour recevoir un dispositif de communication ou de paiement sans contact qui, de préférence, se présente sous la forme d'une carte, par exemple une carte SIM ou tout autre dispositif de forme similaire. Ainsi, le logement se trouvant au sein de la partie supérieure **4** est de préférence également de forme parallélépipédique.

Un premier orifice **5** ouvrant le logement sur l'extérieur de l'accessoire 1, permettant avantageusement l'insertion d'un dispositif de communication ou de paiement sans contact au sein du logement, définit de préférence une fente rectangulaire sur une face **6** de l'accessoire. Alternativement, le premier orifice **5** se présente selon une autre forme adaptée pour recevoir un dispositif de communication ou de paiement sans contact se présentant sous une autre forme qu'une forme de carte, par exemple une forme sphérique ou une forme cylindrique.

Lorsqu'un dispositif de communication sans fil ou de paiement sans contact se trouve dans le logement, l'utilisateur peut extraire le dispositif du logement en appliquant une pression au niveau de la face opposée à celle sur laquelle se trouve le premier orifice 5.

La figure 2 montre une vue en perspective de l'accessoire **1** selon un deuxième mode de réalisation de l'invention lorsqu'une rotation plane de 180° (degré d'angle) de l'accessoire **1** représenté sur la figure 1 a été effectuée. En d'autres termes, la figure 2 montre à gauche la face **7** de l'accessoire **1** opposée à la face **6.** Selon ce deuxième mode de réalisation, sur la face **7** se trouve un second orifice **8** communiquant avec l'intérieur du logement et conformé pour permettre l'insertion d'un objet pointu, par exemple une aiguille, une pointe, un poinçon ou tout autre objet pointu de faible taille. Le second orifice **8** est utilisé, lorsqu'un dispositif de communication ou de paiement sans contact se trouve au sein du logement, pour pousser le dispositif hors du logement via le premier orifice **5.**

Bien que les figures 1 et 2 montrent un accessoire **1** se présentant sous la forme d'un passant comportant deux anneaux, l'accessoire **1** peut alternativement se présenter sous la forme d'un passant présentant seulement un ou plus de deux anneaux. L'homme du métier comprend que, de manière similaire, un logement muni de un ou deux orifices peut être formé au sein d'un passant ne comprenant qu'un seul anneau ou d'un passant comportant plus de deux anneaux. En outre, bien que le premier ou le deuxième mode de réalisation montre un logement formé dans la longueur de l'accessoire, le logement peut alternativement être formé dans la largeur de l'accessoire. Dans le deuxième cas, le ou les orifices sont évidemment rapportés sur les autres faces de l'accessoire en vis-à-vis par rapport au logement.

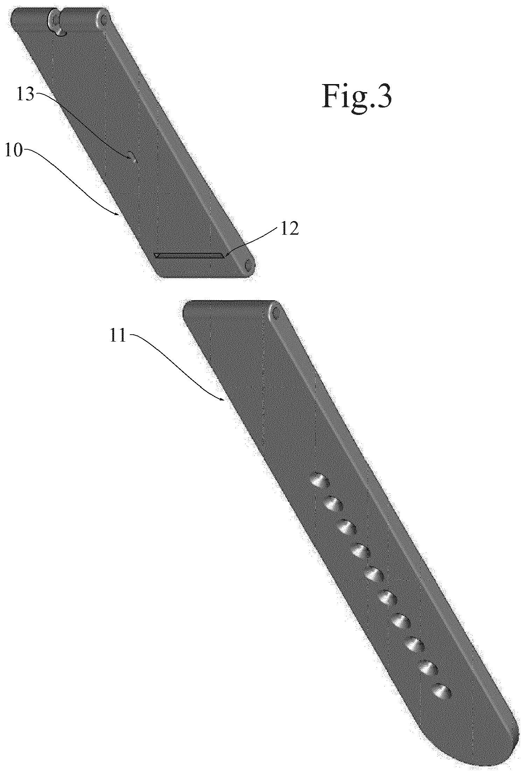

Selon un troisième mode de réalisation ne faisant pas partie de l'invention, représenté sur la figure 3, l'accessoire **10** se présente sous la forme d'un premier brin de bracelet de montre qui, de manière usuelle, comprend un premier brin **10** et deuxième brin **11.** Comme dans le premier et le deuxième mode de réalisation décrit ci-dessus, au sein du premier brin **10** est formé un logement. Le logement est adapté pour recevoir un dispositif de communication ou de paiement sans contact qui, de préférence, se présente sous la forme d'une carte ou d'une plaque, par exemple une carte SIM ou tout autre dispositif de forme similaire. Le logement est muni d'un premier orifice **12** qui définit une fente rectangulaire par laquelle le dispositif de communication ou de paiement sans contact peut être introduit au sein du logement. Comme précédemment, la forme du premier orifice 12 peut alternativement être adaptée à une autre forme prise par le dispositif de communication ou de paiement sans contact.

Le logement est en outre muni d'un second orifice **13** ouvrant le logement sur l'extérieur de l'accessoire **10** qui est conformé pour permettre l'insertion d'un objet pointu et faciliter ainsi l'extraction d'un dispositif de communication ou de paiement sans contact se trouvant au sein du logement. De préférence le second orifice **13** est de forme oblongue ou circulaire. Alternativement, le deuxième orifice présente une forme rectangulaire, carrée ou triangulaire.

Selon un quatrième mode de réalisation ne faisant pas partie de l'invention, l'accessoire est similaire à celui selon le troisième mode de réalisation mais en diffère en ce que le second orifice 13 n'est pas présent.

Bien que le troisième ou le quatrième mode de réalisation et la figure 3 présentent un accessoire qui se présente sous la forme d'un premier brin de bracelet, celui destiné à recevoir à son extrémité une boucle, il est évident que l'accessoire peut de manière équivalente se présenter sous la forme d'un deuxième brin **11.** En outre, bien que la figure 3 présente les orifices sur une face du brin **11,** il est évident que ces orifices peuvent également se trouver sur l'autre face du brin ou être formés dans l'épaisseur de celui-ci. Enfin, l'homme du métier comprendra que, bien que la figure 3 représente de manière schématisée un accessoire se présentant sous la forme d'un brin de bracelet qui pourrait être en plastique ou en cuir, le troisième ou le quatrième mode de réalisation englobe également les brins de bracelet métalliques.

L'accessoire selon l'invention est de préférence fait en cuir, en un matériau plastique ou en un matériau synthétique. Alternativement, l'accessoire selon l'invention est fait en un matériau contenant du carbone et/ou du métal. De préférence, l'accessoire selon l'invention est souple.

Un premier avantage conféré par l'accessoire pour montre-bracelet selon l'invention est de pouvoir loger de manière amovible un dispositif de communication ou de paiement sans contact au sein d'un accessoire qui peut être adapté sur n'importe quelle montre-bracelet. En effet, l'accessoire selon le premier ou le deuxième mode de réalisation peut être mis sur n'importe quel bracelet de montre - mais également sur n'importe quel bracelet bijou, sur une ceinture, sur une bandoulière ou une bretelle de sac, etc. - alors que l'accessoire selon le troisième ou le quatrième mode de réalisation peut substituer n'importe quel brin de bracelet. Ainsi, en utilisant un accessoire selon l'invention, un utilisateur peut à volonté transférer des fonctionnalités conférées par un dispositif de communication ou de paiement sans contact spécifique d'une montre à l'autre de sa collection.

Un second avantage conféré par l'accessoire selon l'invention est qu'il est adapté pour que aussi bien l'insertion que l'extraction d'un dispositif de communication ou de paiement sans contact au sein ou du sein de l'accessoire puisse être réalisé sans endommager l'accessoire et sans avoir à modifier, même de manière momentanée, sa structure. L'accessoire selon l'invention donne donc le choix à l'utilisateur de décider les périodes pendant lesquelles il souhaite porter un dispositif de communication ou de paiement sans contact et ce sans qu'il doive décider, au cas où il ne souhaite pas porter un tel dispositif, de ne pas porter de montre. Sur ce point, l'accessoire selon l'invention apporte donc une complète liberté de choix à l'utilisateur.

## Revendications

1. Accessoire (1) pour montre-bracelet se présentant sous la forme d'un passant (1) pour bracelet de montre-bracelet et comprenant un logement conformé pour recevoir un dispositif de communication sans fil se présentant sous la forme d'une carte, le logement comprenant un premier orifice (5) conformé pour permettre l'insertion du dispositif de communication au sein de l'accessoire, ledit premier orifice (5) se présentant en forme de fente rectangulaire de sorte que le dispositif de communication sans fil peut être logé de manière amovible au sein de l'accessoire, **caractérisé en ce que** le logement comprend un second orifice (8) de forme circulaire ou oblongue se trouvant sur une face opposée à celle sur laquelle se trouve le premier orifice (5), ledit second orifice étant conformé pour qu'un objet pointu puisse y être introduit, si bien que, lorsque le dispositif de communication sans fil est logé dans le logement, l'extraction du dispositif de communication du logement peut être effectuée sans endommager l'accessoire et sans modifier la structure de l'accessoire.

2. Accessoire selon la revendication 1, **caractérisé en ce que** le passant comprend deux anneaux (2, 3).

3. Accessoire selon l'une des revendications précédentes, **caractérisé en ce que** l'accessoire est en un matériau plastique, en un matériau synthétique, en un matériau contenant du carbone et/ou du métal ou en cuir.

4. Montre-bracelet, **caractérisée en ce que** la montre est munie d'un accessoire (1) selon l'une des revendications précédentes.

## Patentansprüche

1. Zubehör (1) für eine Armbanduhr, das in Form einer Schlaufe (1) für ein Armbanduhrarmband vorliegt und eine Aufnahme umfasst, die ausgebildet ist, um eine drahtlose Kommunikationsvorrichtung aufzunehmen, die in Form einer Karte vorliegt, wobei die Aufnahme eine erste Öffnung (5) umfasst, die ausgebildet ist, um das Einsetzen der Kommunikationsvorrichtung in das Zubehör zu gestatten, wobei die erste Öffnung (5) in Form eines rechteckigen Schlitzes vorliegt, so dass die drahtlose Kommunikationsvorrichtung lösbar im Zubehör untergebracht sein kann, **dadurch gekennzeichnet, dass** die Aufnahme eine zweite kreisförmige oder längliche Öffnung (8) umfasst, die sich auf einer Fläche befindet, die derjenigen gegenüberliegt, auf der sich die erste Öffnung (5) befindet, wobei die zweite Öffnung ausgebildet ist, damit ein spitzer Gegenstand dort einführbar ist, so dass, wenn die drahtlose Kommunikationsvorrichtung in der Aufnahme untergebracht ist, das Herausnehmen der Kommunikationsvorrichtung aus der Aufnahme durchgeführt werden kann, ohne das Zubehör zu beschädigen und ohne die Struktur des Zubehörs zu verändern.

2. Zubehör nach Anspruch 1, **dadurch gekennzeichnet, dass** die Schlaufe zwei Ringe (2, 3) umfasst.

3. Zubehör nach einem der vorangehenden Ansprüche, **dadurch gekennzeichnet, dass** das Zubehör aus einem Kunststoffmaterial, aus einem synthetischen Material, aus einem Material, das Carbon und/oder Metall enthält oder aus Leder ist.

4. Armbanduhr, **dadurch gekennzeichnet, dass** die Uhr mit einem Zubehör (1) nach einem der vorangehenden Ansprüche ausgestattet ist.

## Claims

1. An accessory (1, 10) for a bracelet watch assuming the form of a loop (1) for a bracelet of a bracelet watch and comprising a housing configured to receive a wireless communication device assuming the form of a card, the housing comprising a first orifice configured to allow the communication device to be inserted into the accessory, said first orifice (5) assuming the form of a rectangular slit such that the wireless communication device can be housed removably in the accessory, **characterized in that** the housing comprises a second orifice (8) having a circular or oblong shape on a face opposite to the on e on which the first orifice (5) is located; said second orifice being configured so that a pointy object can be inserted rein, such that, when the wireless communication device is housed in the housing, the removal of the communication device from the housing can be done without damaging the accessory and without modifying the structure of the accessory.

2. The accessory according to claim 1, **characterized in that** the loop comprises two rings (2, 3).

3. The accessory according to one of the preceding claims, **characterized in that** the accessory is made from plastic, a synthetic material, a material containing carbon and/or a metal or leather.

4. A bracelet watch, **characterized in that** the watch is provided with an accessory (1) according to one of the preceding claims.
